# EUROPEAN PATENT APPLICATION

(11) **EP 1 503 509 A1**
(43) Date of publication of application: **02.02.2005**
(21) Application number: 03723183.4
(22) Date of filing: 23.04.2003
(51) Int. Cl.: H04B 1/40

(54) **MOBILE COMMUNICATION APPARATUS**

(30) Priority: 09.05.2002 JP 2002134301
(71) Applicant: MATSUSHITA ELECTRIC INDUSTRIAL CO., LTD., Kadoma-shi, Osaka 571-8501 (JP)
(72) Inventor: OKADA, Shinichi, Yokohama-shi, Kanagawa 223-0053 (JP); OKAWA, Sadao, Toyohashi-shi, Aichi 441-8156 (JP); SHINOMIYA, Masato, Yokohama-shi, Kanagawa 222-0001 (JP); MOCHIZUKI, Makoto, Kamakura-shi, Kanagawa 247-0074 (JP)
(74) Representative: Grünecker, Kinkeldey, Stockmair & Schwanhäusser Anwaltssozietät
(86) International application number: PCT/JP2003/005208
(87) International publication number: WO 2003/096561

(57) **Abstract**

It is an object of the present invention to accomplish a frequency synthesizer portion capable of simultaneous operations for transmission and reception with a simple configuration. A mobile communication device associated with the present invention has a frequency-switchable first VCO (11) for creating local oscillator signals for transmission and reception, respectively, and a second VCO (12) for creating a local oscillator signal for transmission in a case of simultaneous operations for transmission and reception. Furthermore, there is provided a switch (16) for connecting the first VCO (11) with a transmitter mixer (31) and a receiver mixer (21) when transmission or reception is performed and for connecting the second VCO (12) and first VCO (11) with the transmitter mixer (31) and receiver mixer (21), respectively, when transmission and reception are performed simultaneously. In addition, the oscillation frequency of the second VCO (12) is set to twice the oscillation frequency of the first VCO (11) used during transmission. A 1/2 frequency divider (18) and a switch (17) are provided to frequency-divide the output from the second VCO (12) by a factor of 2 during operation of the second VCO (12).

## Description

### TECHNICAL FIELD

The present invention relates to a mobile communication device capable of simultaneous operations for transmission and reception and, more particularly, to the construction of the frequency synthesizer portion for supplying local oscillator signals to the transmitter portion and receiver portion.

### BACKGROUND ART

In a mobile communication system using mobile phones and so on as mobile station terminals, data communications using packet communications are enabled, in addition to voice phone conversations. In recent years, packet communications using wireless technology in which transmission and reception are enabled simultaneously to improve the data transfer rate have begun to be used. For example, an asymmetric packet communication has been proposed. In particular, when a packet communication is performed by TDMA (Time Division Multiple Access) technology, during one subframe that is a unit when time division multiplexing is performed, plural slots for performing data transfer from a base station to a mobile station terminal in the downstream direction are made available. Where the slots are empty, the mobile station terminal performs reception operations consecutively. The data transfer rate in the downstream direction can be improved by such an asymmetric packet communication.

In the mobile communication devices enabling data communications as described above, the market has requested a portable-type mobile communication device used as a mobile station terminal and corresponding to simultaneous operations for transmission and reception.

When transmission and reception are performed at the same time, the mobile communication device corresponding to simultaneous operations for transmission and reception is in a state where the circuits of the transmission system and reception system operate at the same time. Therefore, it is necessary to supply two local oscillator signals corresponding to the transmission and reception frequencies, respectively, from the frequency synthesizer portion to the transmitter mixer and receiver mixer which perform frequency conversions. Consequently, the frequency synthesizer portion needs a configuration capable of creating local oscillator signals of two frequencies.

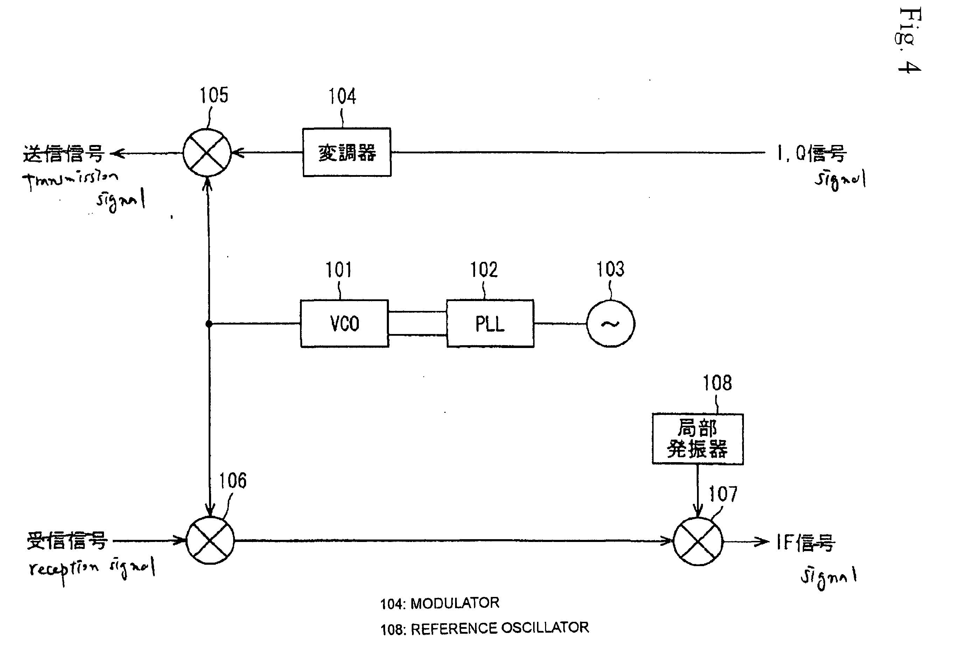

Fig. 4 is a block diagram showing an example of configuration of the frequency synthesizer portion in the related mobile communication device. This example schematically shows the configuration of a general frequency synthesizer portion which is used in a TDMA-type mobile communication device and which does not correspond to simultaneous operations for transmission and reception. The frequency synthesizer portion is designed to have a VCO (voltage-controlled oscillator) 101, a PLL (phase-locked loop) 102, and a reference oscillator 103. In this frequency synthesizer portion, the reference oscillator signal produced from the reference oscillator 103 is supplied to the VCO 101 via the PLL 102. A local oscillator signal of a given frequency is created by the VCO 101 and PLL 102 and is output.

The transmission system has a modulator 104 and a transmitter mixer 105. The modulator 104 receives transmission signals of I and Q signals (orthogonal signals) delivered from a baseband portion and makes a quadrature modulation such as π/4 shift PSK. In the transmitter mixer 105, the output from the modulator 104 and the local oscillator signal delivered from the VCO 101 are mixed and converted into an RF transmission signal, which is output to a power amplifier for transmission. The reception system has two receiver mixers 106 and 107. A reception signal received by the antenna is frequency-converted into two stages of intermediate frequencies, i. e., first IF and second IF, by the first receiver mixer 106 and second receiver mixer 107. The result is output as a reception signal of IF signal to the demodulator. At this time, in the first receiver mixer 106, mixing with the first local oscillator signal delivered from the VCO 101 is done. In the second receiver mixer 107, mixing with the second local oscillator signal delivered from a local oscillator 108 is done.

In the frequency synthesizer portion of this construction, when transmission and reception are performed switchingly in a time-shared manner, the output frequency of the VCO 101 is switched at high speed, and local oscillator signals corresponding to the transmission and reception frequencies, respectively, are output. However, to permit simultaneous operations for transmission and reception, it is necessary to modify the configuration such that the local oscillator signals of the two frequencies are output at the same time. For example, a separate structure is added.

The frequency synthesizer portion of the related art example corresponds to TDMA-type communications which perform transmission and reception in a time-sharing manner by switching the output frequency from the VCO 101 at high speed and outputting local oscillator signals corresponding to the transmission and reception frequencies, respectively. To permit it to correspond to simultaneous operations for transmission and reception with this configuration, it is necessary to modify the configuration such that local oscillator signals of two frequencies can be output at the same time, e.g., addition of a different structure. For example, a configuration using a frequency divider, adder, or the like to create local oscillator signals corresponding to both transmission and reception frequencies at the same time is conceivable. However, the circuit configuration is made complex. The circuit is made more difficult to adjust. For these and other reasons, it is difficult to use this means in an actual device.

A mobile communication device detects at given timing whether there is any base station at a high reception signal level around the system other than the base station with which the mobile station terminal is currently making a communication, i.e., so-called search for surrounding levels. In this search for surrounding levels, the reception frequency is varied during idle periods in which the reception signal from the base station currently engaging in a communication is unavailable, and the signal levels from the surrounding base stations are noticed. When simultaneous operations for transmission and reception are performed, the aforementioned search for surrounding levels might be performed during transmission. With such a configuration in which local oscillator signals corresponding to both transmission and reception frequencies are created at the same time, it is difficult to maintain constant the transmission frequency while varying the reception frequency.

The present invention has been made in view of the foregoing situations. It is an object of the invention to provide a mobile communication device capable of realizing a frequency synthesizer portion permitting simultaneous operations for transmission and reception with a simple configuration.

### DISCLOSURE OF THE INVENTION

The mobile communication device of the present invention is a mobile communication device capable of simultaneous operations for transmission and reception and has a frequency synthesizer portion having a frequency-switchable first oscillator for creating local oscillator signals for transmission and reception and a second oscillator for creating a local oscillator signal for transmission in a case where transmission and reception are performed at the same time.

According to the above-described structure, the second oscillator is mounted which is used for transmission in a case where transmission and reception are performed at the same time. Consequently, the frequency synthesizer portion capable of simultaneous operations for transmission and reception can be accomplished with a simple configuration. In this case, the transmission local frequency can be created by the output from the second oscillator without varying the oscillation frequency of the first oscillator. Hence, it is easy to cope with simultaneous operations for transmission and reception. Furthermore, stable performance is obtained during operations for transmission and reception.

Furthermore, the second oscillator operates only when simultaneous operations for transmission and reception are performed, and the mobile communication devices includes a switch for connecting the first oscillator with the transmitter mixer and receiver mixer when transmission or reception is performed and for connecting the second and first oscillators with the transmitter mixer and receiver mixer, respectively, when the aforementioned simultaneous operations for transmission and reception are performed.

According to the above-described configuration, the frequency synthesizer portion capable of simultaneous operations for transmission and reception can be accomplished with a simple configuration. Furthermore, the operating currents of the oscillators used when voice phone conversations are made can be reduced by operating the second oscillator for transmission only when simultaneous transmission and reception is done and by operating only the first oscillator when one of transmission and reception is performed. The total power consumption is reduced. Furthermore, during simultaneous operations for transmission and reception, the reception frequency based on the output from the first oscillator and the transmission frequency based on the output from the second oscillator are independent of each other and so one of the reception local frequency (reception frequency) and transmission local frequency (transmission frequency) can be easily changed without affecting the other. For example, even when simultaneous operations for transmission and reception are being performed, the reception frequency can be varied regardless of the transmission frequency during transmission. Therefore, the search for surrounding levels, i.e., search for reception signal levels from surrounding other base stations, can be carried out easily.

Another feature is that the oscillation frequency of the second oscillator is set in such a way that the difference between the oscillation frequency of this second oscillator and the oscillation frequency of the first oscillator is greater than the difference between the transmission local frequency and the reception local frequency.

According to the above-described structure, mutual interference can be prevented when the two oscillators are simultaneously in operation, by setting apart the oscillation frequencies of the two oscillators. Deterioration of the communications performance can be suppressed. For example, the oscillation frequency of the second oscillator may be set sufficiently remote from that of the first oscillator, and the vicinities of the transmitter mixer may be designed according to this oscillation frequency. The structure in vicinities of the transmitter mixer is simplified by setting the oscillation frequency of the second oscillator to twice or 5/3 times the oscillation frequency of the first oscillator used during transmission.

A further feature is that the oscillation frequency of the second oscillator is set to twice the oscillation frequency of the first oscillator used during transmission and a frequency divider frequency-divides the output from the second oscillator into one half thereof during operation of the second oscillator.

According to the configuration described above, the oscillation frequencies of the two oscillators can be set apart sufficiently. Therefore, mutual interference can be prevented when the two oscillators are operating at the same time. It is possible to suppress deterioration of the communications performance. Furthermore, the circuit configuration can be simplified by doubling the frequency.

### BRIEF DESCRIPTION OF THE DRAWINGS

Fig. 1 is a block diagram showing the structure of the main portion of a mobile communication device associated with a first embodiment of the present invention;
Fig. 2 is a time chart showing transmission and reception timings during voice communication and during asymmetric packet communication;
Fig. 3 is a block diagram showing the configuration of the main portion of a mobile communication device associated with a second embodiment of the invention; and
Fig. 4 is a block diagram showing an example of structure of the frequency synthesizer portion in the prior art mobile communication device.

Symbols used in the figures are: 11: first VCO; 12, 52: second VCOs; 13: first PLL; 14, 54: second PLLs; 15: reference oscillator; 16, 17: switches; 18: 1/2 frequency divider; 20, 23, 24, 41, 42: filters; 21, 25: receiver mixers; 22: amplifier for reception; 26: multiplier; 31, 61: transmitter mixers; 32, 62: 1/4 frequency dividers; 33, 63: modulators; 34: transmitter circuit; 43: antenna-switching device; and 44: antenna.

### BEST MODE FOR CARRYING OUT THE INVENTION

Embodiments of the present invention are hereinafter described with reference to the drawings.

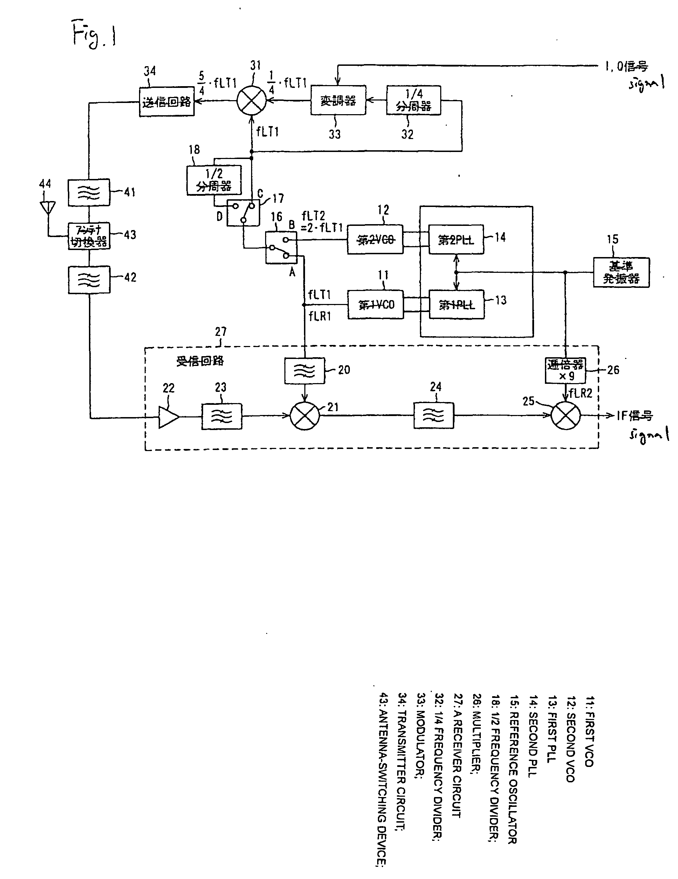

Fig. 1 is a block diagram showing the configuration of the main portion of a mobile communication device associated with a first embodiment of the invention.

In the present embodiment, the configuration of the frequency synthesizer portion of a mobile phone is shown as one example of the mobile communication device associated with the present invention, the mobile phone being used in a mobile station terminal for a mobile communication system. The mobile communication device of the present embodiment corresponds to TDMA (Time Division Multiple Access)-type voice phone conversations, packet communications, and so on, and is designed to be capable of simultaneous operations for transmission and reception in a case of packet communication or the like.

As shown in Fig. 1, the mobile communication device of the present embodiment has a first VCO 11 corresponding to a first oscillator delivering local oscillator signals corresponding to transmission and reception frequencies, respectively, and a second VCO 12 corresponding to a second oscillator delivering a local oscillator signal for creation of a transmission frequency during simultaneous operations for transmission and reception. A first PLL 13 and a second PLL 14 are connected with the first VCO 11 and second VCO 12, respectively. A reference oscillator 15 consisting of a TCXO or the like is connected with the first PLL 13 and second PLL 14. These first VCO 11, first PLL 13, second VCO 12, and second PLL 14 create and output local oscillator signals of given frequencies, based on the reference oscillator signal produced from the reference oscillator 15.

The output end of the first VCO 11 is connected with one switching terminal A of a switch 16 corresponding to a switch, and is also connected with a first receiver mixer 21 via a filter 20. The receiver system is provided with an amplifier (low-noise amplifier) 22 for reception, a filter 23, the first receiver mixer 21, a filter 24, a second receiver mixer 25, and a multiplier 26. Thus, a receiver circuit 27 is constituted.

The output end of the second VCO 12 is connected with the other switching terminal B of the switch 16. The common terminal of the switch 16 is connected with the common terminal of a switch 17, and is connected with a transmitter mixer 31 and a 1/4 frequency divider 32 via this switch 17. One switching terminal C of the switch 17 is directly connected with the transmitter mixer 31 and 1/4 frequency divider 32, while the other switching terminal D is connected with the transmitter mixer 31 and 1/4 frequency divider 32 via a 1/2 frequency divider 18. The transmitter system is provided with a transmitter circuit 34 having a 1/4 frequency divider 32, a modulator 33, the transmitter mixer 31, a power amplifier for transmission, and a filter.

The aforementioned transmitter circuit 34 and receiver circuit 27 are connected with a filter 41 on the transmitter side and a filter 42 on the receiver side, respectively, and are connected with an antenna-switching device 43 via these filters 41 and 42. The antenna-switching device 43 is designed to have a switch for selectively and switchingly connecting an antenna 44 with the transmitter circuit 34 and receiver circuit 27, the antenna 44 acting to send and receive radio-frequency communication signals.

The operation in the mobile communication device of the present embodiment is next described, particularly the operation of the frequency synthesizer portion.

First, the transmission and reception operations in a case where voice communications and normal packet communications (hereinafter referred to as single-packet communications) are described. In this case, the switch 16 is connected with the side of the switching terminal A, while the switch 17 is connected with the side of the switching terminal C. The first VCO 11 is an oscillator of a fast frequency-switching type, and quickly switches the oscillation frequency between a reception local frequency fLR1 corresponding to the reception frequency and a transmission local frequency fLT1 corresponding to the transmission frequency during transmission and reception, respectively, and outputs the oscillation frequency.

The reception signal received by the antenna 44 is entered into the receiver circuit 27 via the antenna-switching device 43 and filter 42 on the receiver side. In the receiver circuit 27, the reception signal is amplified by the amplifier 22 for reception and then frequency-converted into two stages of intermediate frequencies, i.e., first IF and second IF, by the first receiver mixer 21 and second receiver mixer 25. The result is output to the demodulator as a reception signal of an IF signal. At this time, an oscillator signal of frequency fLR1 corresponding to the reception frequency is output from the first VCO 11, and is entered into the first receiver mixer 21 as a first local oscillator signal via the filter 20. In the first receiver mixer 21, mixing of the RF reception signal and first local oscillator signal is done, so that the signal is frequency-converted into the first IF. Furthermore, the reference oscillator signal produced from the reference oscillator 15 is multiplied in frequency by a factor (9 in this embodiment) by the multiplier 26 and entered into the second receiver mixer 25 as a second local oscillator signal of frequency fLR2. In the second receiver mixer 25, mixing of the reception signal of the first IF and the first local oscillator signal is done and frequency-converted into the second IF. The output from the second receiver mixer 25 is sent as a reception signal in the IF band to the demodulator of the baseband portion.

The transmission signals, i.e., I and Q signals (orthogonal signals), output from the baseband portion are entered into the modulator 33, where they are quadrature-modulated such as n/4 shift PSK. At this time, a signal of a frequency obtained by frequency-dividing the oscillator signal of frequency fLT1 corresponding to the transmission frequency output from the first VCO 11 by a factor of 4 by means of the 1/4 frequency divider 32 is entered into the modulator 33, and a modulated signal of this frequency 1/4 · fLT1 is created. In the transmitter mixer 31, the local oscillator signal of transmission local frequency fLT1 from the first VCO 11 and the modulated signal of frequency 1/4 · fLT1 output from the modulator 33 are mixed. In this embodiment, the sum component is used as the output from the transmitter mixer 31. A transmission signal of transmission frequency (1 + 1/4) · fLT1 = 5/4 fLT1 is output. The transmission signal output from the transmitter mixer 31 is amplified by the transmitter circuit 34 and then is output from the antenna 44 via the filter 41 on the transmitter side and antenna-switching device 43.

Operations for transmission and reception in a case where asymmetric packet communications are performed using plural reception slots in the TDMA system are next described. In this case, when there are empty slots, there arise timings at which the transmission and reception slots overlap in terms of time and the transmission and reception systems are operating at the same time in order to operate the reception system continuously.

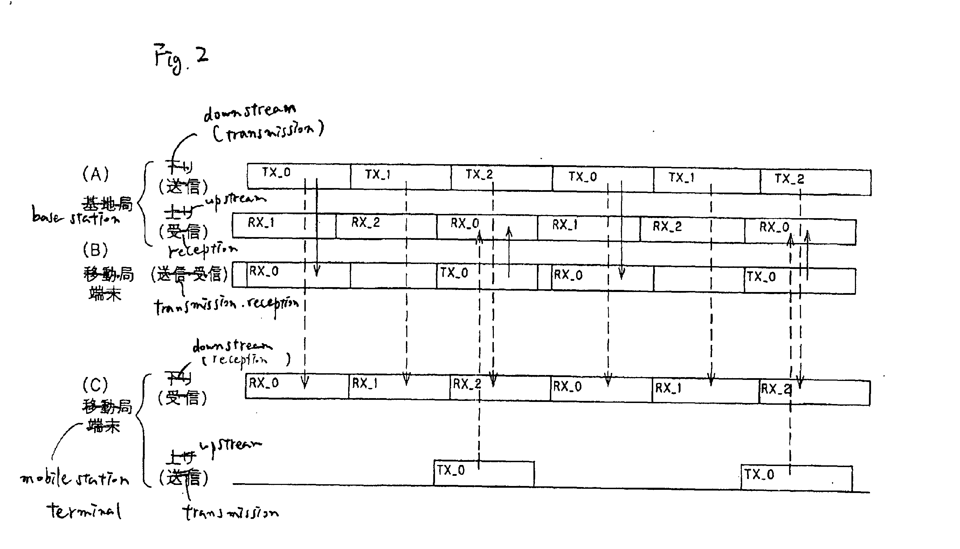

The timings of the slots for transmission and reception in asymmetric packet communications are now described with reference to Fig. 2. Fig. 2 is a time chart showing transmission and reception timings during voice communications and asymmetric packet communications, respectively.

In the example of Fig. 2, one subframe is divided into three slots. Transmission slots TX_0, TX_1, TX_2 and reception slots RX_0, RX_1, RX_2 are provided. At the base station, as shown in Fig. 2(A), downstream transmission operations and upstream reception operations are performed consecutively each over all the slots. The transmission and reception operations are performed simultaneously and in parallel. At each mobile station terminal, in a case where voice phone conversations or single-packet communications are performed, transmission operation and reception operation are alternately performed in a time-sharing manner using one reception slot and one transmission slot (in the illustrated example, RX_0 and TX_0) assigned to the terminal as shown in Fig. 2(B).

Asymmetric packet communication permits use of plural slots that enable downstream data transfer from a base station to a mobile station terminal. Where there are empty slots, the mobile station terminal performs reception operations continuously. Where the mobile station terminal performs asymmetric packet communications, as shown in Fig. 2(C), downstream reception operations are performed continuously using plural slots (in the illustrated example, all of RX_0, RX_1, and RX _2) in a case where there are empty slots. Furthermore, upstream transmission operations are performed intermittently using one transmission slot (in the illustrated example, TX_0) assigned to the terminal, in the same way as in the case of voice phone conversations. The asymmetric communications described so far make it possible to improve the downstream data transfer rate by a factor of about 3 compared with single-packet communications performed by an ordinary TDMA system.

During asymmetric packet communication, the device is in a state in which simultaneous operations for transmission and reception are performed at the timing at which transmission and reception slots overlap (in the illustrated example, TX_0 and RX_2). In the present embodiment, the first VCO 11 for both transmission and reception and the second VCO 12 for transmission only are provided, the second VCO operating during simultaneous operations for reception and transmission such as asymmetric packet communications. A local oscillator signal corresponding to the transmission frequency and a local oscillator signal corresponding to the reception frequency can be created at the same time and output to their respective mixers for frequency conversions.

During such asymmetric packet communication, the switch 16 is connected with the side of the switching terminal B, while the switch 17 is connected with the side of the switching terminal D. The second VCO 12 and second PLL 14 are in an active state. In this case, an oscillator signal of reception local frequency fLR1 is created and output from the first VCO 11 in the same way as during reception of voice communications or single-packet communications as described above. The oscillator signal is taken as the first local oscillator signal for reception and entered into the receiver mixer 21 via the filter 20.

The second VCO 12 is designed such that its oscillation frequency fLT2 is twice the oscillation frequency fLT1 of the first VCO 11 during transmission, i.e., fLT2 = 2 · fLT1. The oscillator signal of frequency fLT2 output from this second VCO 12 is frequency-divided by a factor of 2 by means of 1/2 frequency divider 18 via the switches 16 and 17 and becomes a signal of the same frequency fLT1 as the oscillator signal output from the first VCO 11 during transmission. In the same way as in the case of the aforementioned voice phone conversation, the oscillator signal of the transmission local frequency fLT1 is entered into the 1/4 frequency divider 32 and also into the transmitter mixer 31 as a local oscillator signal. In this mixer, the signals are mixed, and a transmission signal of transmission frequency 5/4 · fLT1 is output.

In the present embodiment, the second VCO 12 used for transmission only is provided, the VCO operating during asymmetric packet communication. Consequently, a frequency synthesizer portion corresponding to simultaneous operations for transmission and reception can be accomplished with a simple configuration without varying the oscillation frequency of the first VCO 11. In this case, switching of the oscillation frequency of the VCO is reduced to a minimum in the frequency synthesizer portion. Therefore, the configuration of the peripheral circuitry can be simplified. Furthermore, adjustments such as optimization of circuits according to the oscillation frequency are not complicated. It is easy to apply the configuration to actual machines or devices. Additionally, stable performance can be obtained during operations for transmission and reception.

Furthermore, during asymmetric packet communication, the reception local frequency based on the output from the first VCO 11 and the transmission local frequency based on the output from the second VCO 12 are independent of each other and so one of the reception local frequency (reception frequency) and transmission local frequency (transmission frequency) can be easily varied without affecting the other. For example, even when simultaneous operations for reception and transmission are being performed, the reception frequency can be varied regardless of the transmission frequency during transmission. Therefore, search for surrounding levels for detecting reception signal levels from surrounding other base stations can be carried out easily.

A configuration for creating local oscillator signals for transmission and reception, respectively, by two VCOs is also conceivable as a configuration provided with two VCOs. With this configuration, if a person attempts to vary the reception frequency, the transmission frequency is varied in an interlocked manner. Therefore, it is necessary to adjust the oscillation frequency on the transmitter side according to variation of the reception frequency. This is difficult to achieve in practical applications. On the other hand, in the configuration of the present embodiment, simultaneous operations for transmission and reception can be performed stably and easily. Also, during transmission, the reception frequency can be modified at will.

A configuration in which VCOs for transmission frequency and reception frequency, respectively, are mounted is also conceivable. In this configuration, the power consumption increases because it is necessary to operate the two VCOs at all times. On the other hand, in the configuration of the present embodiment, the second VCO 12 used for transmission only is operated only during simultaneous operations for transmission and reception such as during asymmetric packet communication and so the total power consumption can be reduced.

In addition, in the present embodiment, the oscillation frequencies of the two VCOs operating simultaneously can be set apart by setting the oscillation frequency fLT2 of the second VCO 12 to twice the oscillation frequency fLT1 of the first VCO 11 during transmission. Where the two VCOs operate, spurious components are produced at the differential frequency between both oscillation frequencies due to mutual interference. If the oscillation frequencies of the two VCOs are close to each other, spurious components appear close to the local oscillation frequencies. This creates the danger that the reception performance or transmission performance deteriorates. Accordingly, mutual interference can be prevented by setting apart the oscillation frequencies of the two VCOs, in the same way as in the present embodiment.

It is to be noted that the oscillation frequency of the second VCO 12 may be so set, for example, that the difference between the oscillation frequency of this second VCO and the oscillation frequency of the first VCO 11 is greater than the difference between the transmission local frequency and reception local frequency. If the oscillation frequency of the second VCO 12 is set to twice the oscillation frequency of the first VCO 11 during transmission as in the present embodiment, the oscillation frequencies of the two VCOs operating simultaneously can be set apart sufficiently. Also, the circuit configuration is made simple with more desirable results.

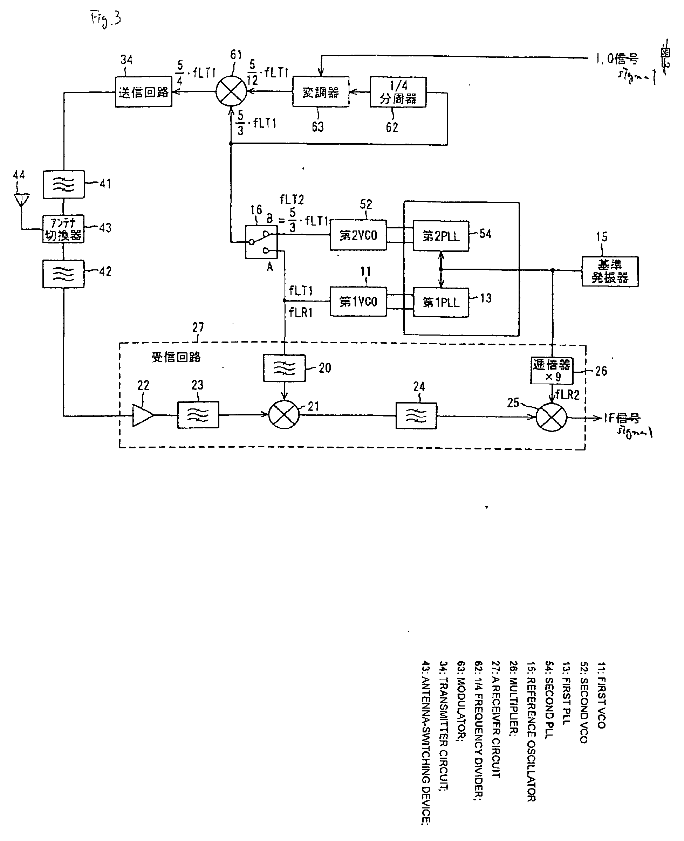

Fig. 3 is a block diagram showing the configuration of the main portion of a mobile communication device associated with a second embodiment of the present invention.

The second embodiment is a modified embodiment, i.e., the configuration of the first embodiment is partially modified and the oscillation frequency of the second VCO 52 is changed. In the configuration of this second embodiment, the common terminal of the switch 16 is connected with the transmitter mixer 61 and 1/4 frequency divider 62 without providing any of the switch 17 and 1/2 frequency divider 18 in the first embodiment shown in Fig. 1. Constituent elements which are similar to their respective counterparts of the first embodiment are indicated by the same symbols as in the first embodiment and so their description is omitted. Only the operation during asymmetric packet communication is described herein.

During asymmetric packet communication, the switch 16 is connected with the side of the switching terminal B, and the second VCO 52 and second PLL 54 are placed in an active state. In this case, with respect to the output from the first VCO 11, an oscillation frequency of reception local frequency fLR1 is created and output, in the same way as during reception of voice communication or single-packet communication, and entered as a first local oscillator signal for reception into the receiver mixer 21 via the filter 20.

The second VCO 52 is configured such that the oscillation frequency fLT2 is 5/3 times the oscillation frequency fLT1 of the first VCO 11 during transmission, i.e., fLT2 = 5/3 fLT1. The oscillator signal of the frequency fLT2 delivered from this second VCO 52 is entered into the 1/4 frequency divider 62 via the switch 16 and entered as a local oscillator signal into the transmitter mixer 61. In the modulator 63, a quadrature modulation such as π/4 shift PSK is performed, based on the transmission signals of the I and Q signals (orthogonal signals) from the baseband portion. At this time, a signal of a frequency obtained by frequency-dividing the oscillator signal of the frequency fLT2 by a factor of 4 by means of the 1/4 frequency divider 62, i.e., 1/4 · fLT2 = 5/12 · fLT1, is entered into the modulator 63. A modulated signal of this frequency 5/12 · fLT1 is created.

And, in the transmitter mixer 61, the local oscillator signal of the transmission local frequency 5/3 · fLT1 from the second VCO 52 and the modulated signal of the frequency 5/12 · fLT1 delivered from the modulator 63 are mixed. Here, the differential component is used as the output from the transmitter mixer 61. A transmission signal of transmission frequency (5/3 - 5/12) · fLT1 = 5/4 · fLT1 is output.

In this way, in the second embodiment, too, a frequency synthesizer portion corresponding to simultaneous operations for transmission and reception can be accomplished with a simple configuration by providing the second VCO 52 used for transmission only and operating during asymmetric packet communication without varying the oscillation frequency of the first VCO 11, in the same way as in the first embodiment. Also, during asymmetric packet communication, the reception frequency can be modified during transmission independently of the transmission frequency. Therefore, search for surrounding levels can be carried out easily. In addition, in the second embodiment, the oscillation frequencies of the two VCOs operating at the same time can be set apart sufficiently by setting the oscillation frequency fLT2 of the second VCO 52 to 5/3 times the oscillation frequency fLT1 of the first VCO 11 during transmission. Mutual interference between the two VCOs can be suppressed.

While the present invention has been described in detail with reference to specific embodiments thereof, it is obvious for those skilled in the art that various changes and modifications can be made without departing from the spirit and scope of the present invention.

The present application is based on Japan Patent Application No. 2002-134301 filed on May 9, 2002, the contents of which are incorporated herein for reference.

### INDUSTRIAL APPLICABILITY

As described so far, according to the present invention, in a mobile communication device, a frequency synthesizer portion capable of simultaneous operations for transmission and reception can be accomplished with a simple configuration.

## Claims

1. A mobile communication device capable of simultaneous operations for transmission and reception, the mobile communication device, comprising:
a frequency synthesizer portion, including:
a frequency-switchable first oscillator, which creates local oscillator signals for transmission and reception, respectively; and
a second oscillator, which creates a local oscillator signal for transmission in a case where the transmission and reception are performed simultaneously.

2. The mobile communication device as set forth in claim 1, wherein the second oscillator operates only when the transmission and reception are performed simultaneously; and
the mobile communication device comprising:
a switch, which connects the first oscillator with a transmitter mixer and a receiver mixer when either one of transmission or reception is performed, and the switch connects the second oscillator with the transmitter mixer and connects the first oscillator with the receiver mixer, when the transmission and reception are performed simultaneously.

3. The mobile communication device as set forth in any one of claims 1 and 2, wherein oscillation frequency of the second oscillator is set so that a difference between the oscillation frequency of the second oscillator and oscillation frequency of the first oscillator is greater than a difference between a transmission local frequency and a reception local frequency.

4. The mobile communication device as set forth in any one of claims 1 and 2, wherein the oscillation frequency of the second oscillator is set to twice the oscillation frequency of the first oscillator for transmission,
the mobile communication device, comprising a frequency divider which frequency-divides an output from the second oscillator into one half thereof during operation of the second oscillator.
